(19) Europäisches Patentamt
European Patent Office
Office européen des brevets

(11) Veröffentlichungsnummer: **0 443 144 B1**

(12) **EUROPÄISCHE PATENTSCHRIFT**

(45) Veröffentlichungstag der Patentschrift: **21.09.94**

(51) Int. Cl.⁵: **C08G 18/10**, C08G 18/30, C08G 18/73, C08G 18/75, C09D 175/04

(21) Anmeldenummer: **90124292.5**

(22) Anmeldetag: **15.12.90**

Die Akte enthält technische Angaben, die nach dem Eingang der Anmeldung eingereicht wurden und die nicht in dieser Patentschrift enthalten sind.

(54) **Verwendung von Urethangruppen aufweisenden Isocyanaten als Trocknungsmittel und ein Verfahren zur Herstellung eines Beschichtungsmittels.**

(30) Priorität: **23.02.90 DE 4005763**

(43) Veröffentlichungstag der Anmeldung:
**28.08.91 Patentblatt 91/35**

(45) Bekanntmachung des Hinweises auf die Patenterteilung:
**21.09.94 Patentblatt 94/38**

(84) Benannte Vertragsstaaten:
**AT BE CH DE ES FR GB IT LI NL SE**

(56) Entgegenhaltungen:
**EP-A- 0 010 248** **EP-A- 0 261 409**
**EP-A- 0 406 604** **FR-A- 2 235 145**
**FR-A- 2 322 892** **US-A- 3 479 325**
**US-A- 4 383 070** **US-A- 4 560 494**

(73) Patentinhaber: **BAYER AG**
**D-51368 Leverkusen (DE)**

(72) Erfinder: **Pedain, Josef, Dr.**
**Haferkamp 6**
**W-5000 Köln 80 (DE)**
Erfinder: **Schwindt, Jürgen, Dr.**
**H.-T.-v.-Böttinger Strasse 14**
**W-5090 Leverkusen 1 (DE)**
Erfinder: **König, Klaus, Dr.**
**Zum Hahnenberg 40**
**W-5068 Odenthal (DE)**
Erfinder: **Schönborn, Manfred**
**Am Scherfenbrand 71**
**W-5090 Leverkusen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft die Verwendung von bestimmten, Urethangruppen aufweisenden Isocyanaten mit (cyclo)aliphatisch gebundenen Isocyanatgruppen als Trocknungsmittel für feuchte Hilfs- und Zusatzmittel für Einkomponenten-Beschichtungsmittel auf Basis von (cyclo)aliphatischen Isocyanat-Prepolymeren, sowie ein Verfahren zur Herstellung eines Beschichtungsmittels auf Basis von derartigen NCO-Prepolymeren.

Unter dem Einfluß von Feuchtigkeit aushärtbare Beschichtungsmittel, die als Bindemittel organische Polyisocyanate, insbesondere höhermolekulare NCO-Prepolymere, enthalten, sind seit langem bekannt (vgl. z.B. H, Kittel, Lehrbuch der Lacke und Beschichtungen, 1973, Verlag W.A. Colomb Band 1, Teil 2, Seiten 573-576).

Die Beschichtungsmittel bilden nach der Applizierung auf ein Substrat Filme, die durch Aufnahme von Feuchtigkeit aus der Umgebung unter Ausbildung von Harnstoffen vernetzen. Wesentlich bezüglich der Qualität der Lackfilme und insbesondere bezüglich der Lagerstabilität des gebrauchsfertigen Beschichtungsmittels ist die Verwendung von trockenen Hilfs- und Zusatzmitteln wie beispielsweise Pigmenten, Füllstoffen und/oder Lösungsmitteln, so daß vor der Herstellung der Beschichtungsmittel eine einwandfreie Trocknung dieser Zusatzstoffe erfolgen muß. Für diese Trocknung haben sich hochreaktive, organische Isocyanate bewährt (DE-PS 1 245 590, DE-OS 2 539 728, DE-OS 3 204 128).

Die Verwendung von solchen hochreaktiven, niedermolekularen Isocyanatverbindungen, wie insbesondere Tosylisocyanat, ist jedoch auch mit Nachteilen behaftet. Hierzu gehören der hohe Dampfdruck, die oftmals extrem hohe Reaktivität, die besondere Vorsichtsmaßnahme erforderlich macht, und insbesondere der Umstand, daß die Isocyanate mit Wasser kristallisierende Folgeprodukte, beispielsweise Harnstoffe bilden, die in dem Lackansatz auskristallisieren, Trübungen bilden und dadurch zu Filmstörungen und schlechtem Verlauf führen können. Dies gilt insbesondere für solche Beschichtungsmittel, die als Bindemittel (cyclo)aliphatisch gebundene Isocyanatgruppen aufweisende Isocyanat-Prepolymere (NCO-Prepolymere) enthalten, da die entstehenden Nebenprodukte die Wetterbeständigkeit der Lackfilme nachteilig beeinflussen und damit den großen Vorteil dieser Bindemittel im Vergleich zu entsprechenden aromatischen Bindemitteln zunichte machen.

Es war daher die der Erfindung zugrundeliegende Aufgabe, neue Trocknungsmittel bzw. neue Beschichtungsmittel auf Basis von (cyclo)aliphatisch gebundene Isocyanatgruppen aufweisenden NCO-Prepolymeren zur Verfügung zu stellen, die auf die Mitverwendung der genannten hochreaktiven Isocyanate als Trocknungsmittel nicht angewiesen sind und dennoch in Abwesenheit von Feuchtigkeit eine ausgezeichnete Lagerstabilität aufweisen und zu hochwertigen Lackfilmen führen.

Diese Aufgabe konnte mit der nachstehend näher beschriebenen erfindungsgemäßen Verwendung bzw. dem nachstehend näher beschriebenen erfindungsgemäßen Verfahren gelöst werden.

Gegenstand der Erfindung ist die Verwendung von Urethangruppen aufweisenden Isocyanaten oder Isocyanatgemischen mit (cyclo)aliphatisch gebundenen Isocyanatgruppen, die eine mittlere NCO-Funktionalität von mindestens 0,8 bis unter 2,0 und einen NCO-Gehalt von 5 bis 17 Gew.-% aufweisen, als Trocknungsmittel für feuchte Hilfs- und Zusatzmittel, die bei der Herstellung von feuchtigkeitshärtenden, (cyclo)aliphatisch gebundenen Isocyanatgruppen aufweisende Isocyanat-Prepolymere als Bindemittel enthaltenden Beschichtungsmitteln zur Anwendung gelangen.

Gegenstand der Erfindung ist auch ein Verfahren zur Herstellung eines Beschichtungsmittels, welches ein unter dem Einfluß von Feuchtigkeit aushärtendes, aus einem Isocyanat-Prepolymer mit (cyclo)-aliphatisch gebundenen Isocyanatgruppen bestehendes Bindemittel, sowie die aus der Lacktechnologie üblichen Hilfs- und Zusatzmittel enthält, dadurch gekennzeichnet, daß man zumindest die nicht völlig trockenen Hilfs- und Zusatzmittel zunächst bei 60 °C bis 120 °C mit einem Urethangruppen aufweisenden Isocyanat oder Isocyanatgemisch mit (cyclo)aliphatisch gebundenen Isocyanatgruppen, einer mittleren NCO-Funktionalität von mindestens 0,8 bis unter 2,0 und einem NCO-Gehalt von 5 bis 17 Gew.-% behandelt und die so behandelten Hilfs- und Zusatzmittel nach Beendigung der spontan ablaufenden Isocyanat/Wasserreaktion mit dem Bindemittel sowie gegebenenfalls den restlichen Hilfs- und Zusatzmitteln zum gebrauchsfertigen Beschichtungsmittel vereinigt.

Das erfindungsgemäße Verfahren stellt auch gegenüber den Systemen der DE-OS 2 845 514 einen ganz wesentlichen Fortschritt dar, Gemäß der Lehre dieser Veröffentlichung, die sich mit Gemischen aus Mono- und Polyisocyanaten befaßt, müssen Wasser enthaltende Hilfs- und Zusatzmittel nach wie vor mit geeigneten Trocknungsmitteln, beispielsweise mit Tosylisocyanat getrocknet werden, wie dies beispielsweise aus Beispiel 3 hervorgeht. Irgendwelche Anregungen, wie auf die Mitverwendung derartiger Trocknungsmittel verzichtet werden könnte, sind der Veröffentlichung nicht zu entnehmen.

Die US-PS 4 560 494 beschreibt ebenfalls Urethangruppen aufweisende Isocyanate, die jedoch nicht als Trocknungsmittel für feuchte Hilfs- und Zusatzstoffe sondern als die Flexibilität erhöhende Zusatzmittel

den unterschiedlichsten Lackkompositionen zugesetzt werden sind.

Bei den erfindungsgemäß zu verwendenden Trocknungsmitteln handelt es sich um Urethangruppen aufweisende Isocanate bzw. Isocyanatgemische, deren Gehalt an Urethangruppen -NH-CO-O-im allgemeinen bei ca. 10 bis 40 Gew.-% liegt, und die einen Gehalt an (cyclo)aliphatisch gebundenen Isocyanatgruppen von 5 bis 17, vorzugsweise 9 bis 14 Gew.-% bei einer (mittleren) NCO-Funktionalität von unter 2,0, vorzugsweise von 0,8 bis 1,9 und besonders bevorzugt von 1,0 bis 1,8 aufweisen. Eine mittlere NCO-Funktionalität von unter 2,0 wird stets erreicht, wenn Diisocyanate mit ausschließlich ein- und zweiwertigen Alkoholen unter den nachstehend näher beschriebenen Bedingungen der Herstellung der erfindungsgemäßen Trocknungsmittel miteinander umgesetzt werden. Bei den bevorzugten, erfindungsgemäß zu verwendenden Isocyanaten oder Isocyanatgemischen handelt es sich im wesenlichen um Verbindungen der Formeln (A), (B) oder (C) oder um beliebige Gemische derartiger Verbindungen, wobei die alleinige Verwendung von Diisocyanaten der Formel (C) allerdings nicht in Betracht gezogen wird.

$R\text{-}O\text{-}CO\text{-}NH\text{-}X_1\text{-}NCO$ (A)

$R\text{-}O\text{-}CO\text{-}NH\text{-}X_1\text{-}NH\text{-}CO\text{-}O\text{-}X_2\text{-}O\text{-}CO\text{-}NH\text{-}X_1\text{-}NCO$ (B)

$OCN\text{-}X_1\text{-}NH\text{-}CO\text{-}O\text{-}X_2\text{-}O\text{-}CO\text{-}NH\text{-}X_1\text{-}NCO$ (C)

Darin bedeuten:

- R einen, gegebenenfalls Ethersauerstoffatome aufweisenden (cyclo)aliphatischen Kohlenwasserstoffrest mit 3 bis 18, vorzugsweise 6 bis 12, Kohlenstoffatomen,
- $X_1$ einen zweiwertigen aliphatischen Kohlenwasserstoffrest mit 4 bis 18, vorzugsweise 6 bis 13 Kohlenstoffatomen, zweiwertigen cycloaliphatischen Kohlenwasserstoffrest mit 4 bis 18, vorzugsweise 6 bis 13 Kohlenstoffatomen oder einen Xylylen-Rest und
- $X_2$ einen zweiwertigen, gegebenenfalls Ethersauerstoffatome aufweisenden (cyclo)aliphatischen Kohlenwasserstoffrest mit 2 bis 18, vorzugsweise 6 bis 14, Kohlenstoffatomen.

Bei den bevorzugt erfindungsgemäß zu verwendenden Isocyanatgemischen handelt es sich somit um Umsetzungsprodukte aus einem niedermolekularen, destillierbaren aliphatischen Diisocyanat $X_1(NCO)_2$ - ("aliphatisch" bezieht sich ausschließlich auf die Natur der mit den Isocyanatgruppen verbundenen Kohlenstoffatome, so daß auch cycloaliphatische oder araliphatische Diisocyanate umfaßt sind) mit einwertigen Alkoholen ROH und zweiwertigen Alkoholen $X_2$ $(OH)_2$. Es ist jedoch nicht zwingend erforderlich, daß die erfindungsgemäß zu verwendenden Isocyanate bzw. Isocyanatgemische stets gleichzeitig alle drei Isocyanat-Typen (A) bis (C) enthalten müssen. Denkbar ist auch beispielsweise die Verwendung von Umsetzungsprodukten aus einwertigen Alkoholen und Diisocyanaten, d.h. die alleinige Verwendung von Isocyanaten der Formel (A) oder auch, beispielsweise, die Verwendung von Gemischen aus Isocyanaten der Formeln (B) und (C), vorausgesetzt die oben genannten Bedingungen bezüglich NCO-Gehalt und NCO-Funktionalität sind erfüllt. Gegebenenfalls herstellungsbedingt in den Isocyanaten bzw. Isocyanatgemischen vorliegenden Nebenprodukte, insbesondere höhermolekulare Homologe oder NCO-Gruppen-freie Oligourethane, die im allgemeinen in Mengen von insgesamt unter 20 Mol-% vorliegen, beeinträchtigen nicht die erfindungsgemäße Verwendbarkeit der Isocyanate bzw. Isocyanatgemische. Der Gehalt an monomerem Ausgangsdiisocyanat liegt im allgemeinen unter 2, vorzugsweise unter 0,5 Gew.-%.

Zur Herstellung der erfindungsgemäß zu verwendenden Isocyanate bzw. Isocyanatgemische geeignete Diisocyanate $X_1(NCO)_2$ sind beispielsweise 1,4-Diisocyanatobutan, 1,3-Diisocyanatocyclobutan, 1,4-Diisocyanatocyclohexan, Isophorondiisocyanat, 4,4'-Diisocyanatodicyclohexylmethan oder 1,6-Diisocyanatohexan. Das zuletzt genannte Diisocyanat ist besonders bevorzugt.

Geeignete einwertige Alkohole ROH sind beispielsweise Isopropanol, n- oder iso-Butanol, Cyclohexanol, die verschiedenen Isomeren von Hexanol, Heptanol, Octanol, Nonanol, Decanol oder Etheralkohole wie Ethylglykol oder Butylglykol. Besonders bevorzugt wird 2-Ethylhexanol verwendet.

Als Diole $X_2(OH)_2$ kommen beispielsweise Propylenglykol, Butandiol-1,3, Hexandiol-1,6, 1,4-Bis-Hydroxymethyl-cyclohexan, Diethylenglykol, Dipropylenglykol, Tripropylenglykol oder, bevorzugt, 2-Ethylhexandiol-1,3 in Betracht.

Zur Herstellung der erfindungsgemäß zu verwendenden Isocyanate oder Isocyanatgemische können selbstverständlich beliebige Gemische der beispielhaft genannten Ausgangsmaterialien eingesetzt werden.

Die Herstellung der erfindungsgemäß zu verwendenden Isocyanate oder Isocyanatgemische erfolgt in an sich bekannter Weise, beispielsweise indem man überschüssiges Diisocyanat mit den OH-Komponenten bei etwa 80 bis 120 °C zur Reaktion bringt und nach Umsetzung aller Hydroxylgruppen überschüssiges Diisocyanat z.B. durch Destillation entfernt. Bevorzugt wird die Umsetzung stufenweise durchgeführt, indem

zunächst das Diol mit dem überschüssigen Diisocyanat abreagiert und erst danach der Monoalkohol zur Reaktion gebracht wird. Eine besonders bevorzugte Variante besteht darin, daß zunächst Diisocyanat und Diol umgesetzt werden, dann das überschüssige monomere Diisocyanat zum Beispiel durch Dünnschichtdestillation entfernt wird und das Umsetzungsprodukt aus Diol und Diisocyanat mit dem Monoalkohol zur Reaktion gebracht wird. Diese Vorgehensweise liefert besonders gut definierte Produkte, die kaum Nebenprodukte enthalten. Die für eine vorteilhafte Anwendung wichtige NCO-Funktionalität des Produktes läßt sich auf diese Weise besonders gut einstellen.

Entscheidend für den erfindungsgemäßen Einsatz der Isocyanate ist ihre NCO-Funktionalität. Wird die Trocknung mit Isocyanaten durchgeführt, die eine NCO-Funktionalität von < 0,8 haben, besteht die Gefahr, daß sich durch die Reaktionsprodukte, die mit Wasser entstehen können, kristallisierende Anteile, Trübungen und Verlaufstörungen ausbilden. Ist die Funktionalität 2 oder höher, bilden sich höhermolekulare Reaktionsprodukte aus, z.B. durch Polyharnstoff- oder Polybiuretbildung. Dadurch entstehen hochviskose Lösungen, die prinzipiell unbrauchbar sind.

Erfindungswesentlich ist deshalb, daß die NCO-Funktionalität der zur Trocknung verwendeten Polyisocyanate nicht < 0,8, aber < 2 sein muß, d.h. vorzugsweise bei 0,8 bis 1,9 liegt. Bevorzugt wird durch das angewandte Verhältnis von Monoalkohol zu Diol eine NCO-Funktionalität von 1,0 bis 1,8 eingestellt.

Bei den nach dem erfindungsgemäßen Verfahren herzustellenden Beschichtungsmitteln handelt es sich um solche, die als Bindemittel unter dem Einfluß von Feuchtigkeit aushärtbare NCO-Prepolymere mit (cyclo)aliphatisch gebundenen Isocyanatgruppen enthalten. Es handelt sich hierbei um prinzipiell bekannte Produkte gemaß Stand der Technik, d.h. um Umsetzungsprodukte von (cyclo)aliphatischen Polyisocyanaten mit unterschüssigen Mengen an organischen Polyhydroxylverbindungen, insbesondere Polyesterpolyolen oder Polyetherpolyolen der aus der Polyurethanchemie an sich bekannten Art. Diese Bindemittel weisen im allgemeinen einen NCO-Gehalt von ca. 3 bis ca. 12 Gew.-% bei einer (mittleren) NCO-Funktionalität von ca. 2,5 bis 8 auf. Besonders gut geeignet sind beispielsweise die in US-PS 4 801 675 beschriebenen NCO-Prepolymeren. Es können jedoch auch andere Prepolymere eingesetzt werden, die den oben gemachten Ausführungen entsprechen und die beispielsweise auf den oben bereits beispielhaft erwähnten Diisocyanaten mit (cyclo)aliphatischen Isocyanatgruppen basieren.

Das erfindungsgemäße Verfahren kann beispielsweise wie folgt durchgeführt werden:

Die Feuchtigkeit enthaltenden Hilfs- und Zusatzmittel, wie insbesondere Füllstoffe, Pigmente, Lösemittel, Katalysatoren, Verlaufsmittel und dergleichen werden zunächst mit der als Trocknungsmittel wirkenden, Urethangruppen tragenden Isocyanatkomponente zusammengebracht und vermischt und dann auf 60 bis 120 °C, vorzugsweise auf 70 bis 100 °C unter weiterer guter Vermischung erhitzt. Die Trocknung ist nach etwa 15 min bis 2 Stunden abgeschlossen, was durch Beendigung der $CO_2$-Entwicklung festgestellt werden kann. Dann wird zur Fertigstellung des stabilen Einkomponentenlackes mit der Polyisocyanatkomponente und gegebenenfalls mit übrigen wasserfreien Komponenten abgemischt.

In der Praxis verfährt man hierbei dergestalt, daß man aus dem Wassergehalt, der in der Summe aller Zusatzstoffe und Hilfsmittel vorhanden ist, die Menge des Trocknungsmittels errechnet, die einem Molverhältnis von Isocyanatgruppen des Trocknungsmittels zu Wasser von 2:1 bis 30:1, vorzugsweise 3:1 bis 15:1, entspricht und diese berechnete Menge vorab mit den wasserhaltigen Hilfs- und Zusatzmitteln abmischt. Durch Verwendung eines Überschusses der Isocyanatkomponente gegenüber dem aus den Hilfs- und Zusatzmitteln zu entfernenden Wasser wird erreicht, daß freie Isocyanatgruppen übrigbleiben, die zusammen mit den Einkomponenten-PUR-Harzen nach Herstellung des Lackfilmes mit der Luftfeuchtigkeit abreagieren und einen einheitlichen Film ohne Störungen ausbilden. Im übrigen wirkt das als Trocknungsmittel eingesetzte Isocyanat oftmals auch als Thixotropiermittel für das gebrauchsfertige Beschichtungsmittel. Es stellt also gleichzeitig ein Trocknungs- und Stabilisierungsmittel, ein rheologisches Additiv und, da es praktisch restlos eingebaut wird, auch eine Bindemittelkomponente dar.

Trockene Hilfs- und Zusatzmittel können zusammen mit den wasserhaltigen Hilfs- und Zusatzmitteln zu Beginn des Verfahrens oder auch erst am Ende zugesetzt werden. Um die Wasser/NCO-Reaktion bei der dann erfolgenden Trocknung zu beschleunigen, ist es vorteilhaft, die Temperatur des so erhaltenen Gemisches auf 60 bis 120 °C, vorzugsweise 70 bis 100 °C, einzustellen und bis zur Beendigung der Kohlendioxidentwicklung aufrechtzuerhalten. Im Anschluß hieran erfolgt dann die Zugabe der restlichen Bestandteile, insbesondere des Einkomponenten-PUR-Harzes, das gegebenenfalls vorab in einem trockenen Lösungsmittel gelöst zum Einsatz gelangen kann, sowie gegebenenfalls der noch nicht zu Beginn eingesetzten trockenen Hilfs- und Zusatzmittel. Im allgemeinen liegt das Gewichtsverhältnis der beim erfindungsgemäßen Verfahren zur Trocknung eingesetzten Isocyanatkomponente und des EK-PUR-Harzes bei 1:1 bis 1:40, vorzugsweise 1:2 bis 1:10.

Eine spezielle Variante des erfindungsgemäßen Verfahrens besteht darin, nach erfolgter Trocknung als Zusatzstoff bzw. Reaktionspartner noch verkappte Polyamine wie z.B. Polyketimine, Polyaldimine oder

besonders Polyaxazolidine zuzumischen wobei das Molverhältnis von verkappten Aminogruppen zu NCO-Gruppen bei 0,01:1 bis 1:1 liegt. Diese Zusatzmittel nehmen bevorzugt Feuchtigkeit aus der Umgebung auf, hydrolysieren dabei zu Polyaminen, die mit den NCO-Gruppen des PUR-Harzes schnell zu Harnstoffgruppen abreagieren. Man erreicht hierdurch eine schnelle Trocknung und die blasenfreie Ausbildung der Lackfilme. Der Vorteil der erfindungsgemäßen Stabilisierung gegenüber dem Stand der Technik macht sich besonders bei diesen Kombinationen bemerkbar.

Gewünschtenfalls können die wie beschrieben hergestellten Gemische noch mit weiterem (trockenen) Lösungsmittel überschichtet und einige Stunden stehen gelassen werden.

Nach erneutem sorgfältigen Durchmischen erhält man dann ein gebrauchsfertiges, feuchtigkeitshärtendes Einkomponenten-Beschichtungsmittel.

Bei den in den Beschichtungsmitteln vorliegenden Lösungsmitteln handelt es sich um die üblichen Lösungsmittel der Lacktechnologie, beispielsweise um Toluol, Xylol, Alkylaromaten, Ethylacetat, Butylacetat, Methoxypropylacetat, Methylethylketon, Methylisobutylketon oder um Gemische derartiger Lösungsmittel. Bei den übrigen Hilfs- und Zusatzmitteln handelt es sich um die üblicherweise in Einkomponenten-Polyurethanlacken eingesetzten Hilfs- und Zusatzmittel, insbesondere metallische oder mineralische Pigmente, Füllstoffe und sonstige Hilfsmittel, wie sie beispielsweise in H. Kittel, Lehrbuch der Lacke und Beschichtungen, Band III, Verlag W.A. Colomb, Berlin-Schandorf (2976) beschrieben sind.

Die beim erfindungsgemäßen Verfahren erhaltenen Beschichtungsmittel können nach allen Methoden der Beschichtungstechnologie verarbeitet werden. Sie eignen sich zur Herstellung von blasenfreien Beschichtungen einer hohen Schichtdicke auf metallischen Untergründen, auf Beton, Mauerwerk und anderen Substraten. Sie können für Grundierungen und Decklacke besonders vorteilhaft im Korrosionsschutz verwendet werden, beispielsweise zur Beschichtung von Brücken, Containern, Lösungsmittelbehältern, Stahlbauwerken, Hochspannungsmasten; für Beschichtungen im maritimen Bereich, beispielsweise von Bohrinseln, Hafenanlagen, Schleusen, Schwimmdocks und Schiffen.

Auf Grund ihres Aufbaus aus aliphatischen Polyisocyanaten bilden diese Beschichtungsmittel hochwertige, vergilbungsbeständige und wetterstabile Lackfilme aus, die deshalb auch für dekorative Anwendungen geeignet sind.

Die Verfahrensprodukte haben den Vorteil, daß sie keine niedermolekularen Reaktionsprodukte bilden, die schwer löslich sind und den Lackfilm stören können und ebenfalls keine niedermolekularen Mono- oder Diisocyanate enthalten, durch die der Anwender belästigt werden könnte.

Gegenüber den bislang bekannten Einkomponenten-Polyurethan-Beschichtungsmitteln zeichnen sich die erfindungsgemäßen Verfahrensprodukte durch eine verbesserte Lagerstabilität bei zumindest gleich hoher Trocknungsgeschwindigkeit und zumindest vergleichbar guten mechanischen Eigenschaften der resultierenden Lackfilme aus.

In den folgenden Beispielen beziehen sich alle Prozentangaben, soweit nichts anderslautendes vermerkt, auf das Gewicht. Die Viskositäten wurden, soweit nichts anderslautendes angemerkt, bei 23°C ermittelt. Die Angaben bezüglich der NCO-Funktionalität beziehen sich auf die aus der Stöchiometrie der Ausgangsmaterialien berechneten Werte.

## Beispiele

### Allgemeine Herstellungsvorschrift für erfindungsgemäß zu verwendende Isocyanate bzw. Isocyanatgemische

Das als Ausgangsmaterial eingesetzte Diisocyanat bzw. Diisocyanatgemisch wird in einem 10 1-Gefäß vorgelegt und die Hydroxyl-Komponenten zudosiert. Man wählt dabei einen Überschuß an Diisocyanat, so daß auf eine Hydroxylgruppe etwa 3 Isocyanatgruppen entfallen. Das Reaktionsgemisch wird dann unter gutem Vermischen 1 Stunde auf 60°C und anschließend noch 1 Stunde auf 80°C aufgeheizt.

Aus dieser Rohlösung wird überschüssiges Diisocyanat durch Dünnschicht- oder Kurzwegverdampfung abgetrennt, wobei die Destillation so schonend und langsam durchgeführt werden muß, daß praktisch kein monomeres Diisocyanat im Destillationsrückstand verbleibt und andererseits kein Umsetzungsprodukt im Destillat zu finden ist. Der so erhaltene Destillationsrückstand kann anschließend gewünschtenfalls mit weiteren, insbesondere einwertigen Alkoholen umgesetzt werden (Beispiele 5 bis 9) oder direkt erfindungsgemäß verwendet werden.

Die entstehenden Produkte sind farblose, geruchlose, mehr oder weniger viskose Flüssigkeiten oder auch Feststoffe.

Die folgenden Beispielen 1 bis 9 beschreiben die Herstellung einiger erfindungsgemäß zu verwendenden Isocyanate bzw. Isocyanatgemische.

Beispiel 1

Ausgangsmaterialien sind
4.687 g Diisocyanatohexan (HDI)
329 g Diethylenglykol
403 g 2-Ethylhexanol

Nach Entfernung von überschüssigem HDI erhält man ein farbloses, bei 20°C nicht mehr fließendes Produkt mit folgenden Daten:
NCO-Gehalt: 15,1 %.
Mittleres Molgewicht ca. 459
Das Produkt enthält von den Substanzen (A), (B) und (C) etwa 39, 4 und 45 Mol-%. Außerdem sind etwa 12 Mol-% an sonstigen Bestandteilen enthalten, die jedoch die Verwendbarkeit der Isocyanatgemische nicht beeinträchtigen. Die mittlere NCO-Funktionalität liegt bei 1,28.

Beispiel 2

Umgesetzt werden
4.536 g HDI
576 g Tripropylenglykol
390 g 2-Ethylhexanol

Nach Entfernung von überschüssigem HDI erhält man eine farblose Flüssigkeit mit folgenden Daten:
Viskosität: 630 mPa.s
NCO-Gehalt: 13,8 %
mittleres Molgewicht: ca. 521
Zusammensetzung in Mol-%:

ca. 40 Mol-% Substanz (A)
ca. 4 Mol-% " (B)
ca. 45 Mol-% " (C)
ca. 11 Mol-% sonstige Anteile

mittlere NCO-Funktionalität: 1,28

Beispiel 3

Ausgangsprodukte:
3.948 g HDI
485 g n-Dodecanol
350 g Dipropylenglycol

Das nach Entfernung von überschüssigem HDI erhaltene Produkt ist fest.
Daten:
NCO: 6,0 %
mittleres Molgewicht: ca. 520
Zusammensetzung in Mol-%;

38,9 Mol-% Substanz (A)
3,7 Mol-% " (B)
45,4 Mol-% " (C)

Der Rest sind nicht störende Nebenprodukte.
Mittlere NCO-Funktionalität: ca. 1,28

Beispiel 4

Umgesetzt werden
1.512 g HDI
390 g 2-Ethylhexanol
Nach Entfernung von 1.200 g überschüssigem Diisocyanat erhält man eine Flüssigkeit mit folgenden Eigenschaften:
Viskosität: 105 mPa.s
NCO-Gehalt: 12,8 %
mittleres Molgewicht: ca. 310
Die Substanz besteht praktisch zu 100 Mol-% aus Substanz (A).

In den folgenden Beispielen 5 bis 9 erfolgt die Umsetzung in 2 Stufen.

Beispiel 5

Ausgangsstoffe sind
1.008 g HDI
146 g 2-Ethylhexandiol-1,3
Man setzt bei 60 bis 80 °C in 2 Stunden bis zum Verbrauch aller Hydroxylgruppen um und trennt anschließend ca. 700 g überschüssiges HDI ab. Man erhält ein farbloses, flüssiges Umsetzungsprodukt, dem man 65 g 2-Ethylhexanol Zufügt und abreagieren läßt. Das Reaktionsprodukt enthält praktisch keine Substanz (A) und besteht im wesentlichen aus den Substanzen (B) und (C) (Molverhältnis ca. 1:1).

Daten:
NCO-Wert: 10,2 %
Viskosität: 22.000 mPa.s
NCO-Funktionalität: ca. 1,5
In den Beispielen 6 bis 9 wird analog Beispiel 5 verfahren.

Beispiel 6

Einsatzprodukte:
1.008 g HDI
134 g Dipropylenglykol
95 g Gemisch aus 2,4,4-Trimethylhexanol und 3,5,5-Trimethylhexanol (etwa 1:1)
Daten:
NCO-Gehalt: 8,9 %
Viskosität: 30.800 mPa.s
NCO-Funktionalität: 1,34
Das Produkt enthält im wesentlichen Substanzen der allgemeinen Formeln (B) und (C) (die in Mengen von unter 15 Mol-% vorliegenden Hebenprodukte stören die erfindungsgemäße Verwendbarkeit des Polyisocyanatgemischs nicht.)

Beispiel 7

Einsatzmengen:
1.008 g HDI
134 g Dipropylenglykol
104 g 2-Ethylhexanol
Das klare, flüssige Produkt hat folgende Daten:
NCO-Wert: 7,8 %
Viskosität: 25.000 mPa.s
NCO-Funktionalität: 1,2
Der Stoff enthält im wesentlichen Substanzen der allgemeinen Formeln (B) und (C).

Beispiel 8

Eingesetzte Produkte:
1.008 g HDI

90 g Butandiol-1,3
65 g 2-Ethylhexanol
Das klare farblose Produkt hat folgende Daten:
NCO: 12,7 %
Viskosität: 10.000 mPa.s
NCO-Funktionalität: 1,5
Es besteht im wesentlichen aus Substanzen der allgemeinen Formeln (B) und (C).

Beispiel 9

Eingesetzte Produkte:
1.008 g HDI
90 g Butandiol-1,3
86 g 2-Ethylhexanol
Das klare flüssige Produkte hat folgende Daten:
NCO: 9,9 %
Viskosität: 15.000 mPa.s
NCO-Funktionalität: 1,34
In dem Produkt sind im wesentlichen nur Verbindungen der allgemeinen Formeln (B) und (C) enthalten.

Beispiel 10

Dieses Beispiel beschriebt die Herstellung eines feuchtigkeitshärtenden Einkomponenten-Urethanharzes mit freien NCO-Gruppen.

Als Ausgangsstoff benutzt man ein durch Dünnschichtdestillation gereinigtes, Isocyanuratgruppen aufweisendes Polyisocyanat auf Basis von 1,6-Hexandiisocyanat, hergestellt entsprechend Beispiel 1 der EP-A 10 589, (US-PS 4 324 879), mit einem NCO-Gehalt von 21,4 %, einer Viskosität (25 °C) von 2.100 mPa.s, einem Gehalt an monomerem Diisocyanat von 0,1 % und einem Gehalt an Triisocyanato-monoisocyanurat von ca. 49 %.

Dieses Polyisocyanat wird entsprechend Beispiel 1 der EP-A-252 346 (US-PS 4 801 675) umgesetzt mit einem Hydroxylgruppen enthaltenden Polyester aus Trimethylolpropan, 1,4-Bis(hydroxymethyl)-cyclohexan, Ethylenglykol, Neopentylglykol und Phthalsäureanhydrid,

Man erhält ein Einkomponentenurethanharz als 70 %ige Lösung in ®Solvesso 100 (Alkylbenzolgemische)/Methoxypropylacetat (4:1), mit einem NCO-Gehalt von 9,7 % und einer Viskosität von 1.400 mPa.s / 25 °C.

Beispiel 11

Dieses Beispiel beschreibt die Herstellung einer verkappten Aminoverbindung, die als Zusatzmittel zu den Einkomponentenurethanharzen eingesetzt wird, Bei Zutritt von Feuchtigkeit entstehen zwei sek, Aminogruppen, die mit Isocyanaten abreagieren.

1 Mol HDI werden bei 60 °C mit 2 Mol der Verbindung

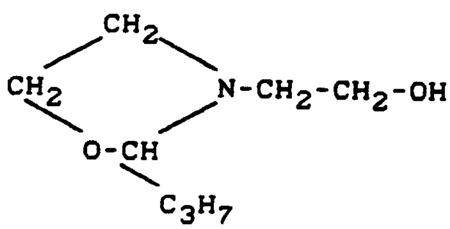

zur Reaktion gebracht. Die Reaktion ist beendet, wenn der NCO-Gehalt bei 0 ist, Man erhält eine viskose farblose Flüssigkeit (Viskosität ca. 8.000 mPa.s).

Allgemeine Vorschrift für das erfindungsgemäße Verfahren

In einem Dispergiergefäß werden Lösemittel, Pigmente, Additive und Füllstoffe eingetragen und mit einer Isocyanatverbindung aus Beispiel 1 bis 9 versetzt.

Die Menge dieser Isocyanatkomponente berechnet man aus dem Wassergehalt der übrigen Komponenten. Mit einer Dissolverscheibe wird zunächst bei langsamer Umdrehungsgeschwindigkeit eine Mischung hergestellt. Anschließend wird das Mahlgut bei > 18 m/s Umfangsgeschwindigkeit der Dissolverscheibe dispergiert. Durch die dabei auftretende Scherung wird die notwendige Temperatur von ca. 80 bis 90 °C schnell erreicht, andernfalls kann auch erhitzt werden, Bei 80 °C läuft die NCO/Wasser-Umsetzung bereits ausreichend schnell ab, so daß die $CO_2$-Entwicklung bereits nach 30 min beendet ist und damit die Trocknung abgeschlossen ist.

Nach dem Abkühlen der Paste auf ca. 30 °C wird bei langsamer Rührgeschwindigkeit das Isocyanatbindemittel (z.B. aus Beispiel 10) und gegebenenfalls die restlichen wasserfreien Bestandteile, z.B. Katalysatoren, zugesetzt.

Beispiel 12

Dieses Beispiel beschreibt die Eigenschaften eins feuchtigkeitshärtenden Einkomponenten-Polyurethanharzes, das nach dem erfindungsgemäßen Verfahren stabilisiert wird. Die Herstellung erfolgt nach der allgemeinen Vorschrift.

Zusammensetzung des Einkomponenten-Beschichtungsmittels:

| | Gew.-Teile |
|---|---|
| Substanz aus Beispiel 4 (als Trocknungsmittel): | 205,9 |
| Weichharz P 65 (als Anreibeharz eingesetzter, keine reaktiven Endgruppen aufweisender Polyester aus o-Phthalsäureanhydrid, Maleinsäure,Hexandiol-1,6, Perhydrobisphenol A, Trimethylolpropan und Benzoesäure, Hersteller Bayer AG): | 102,9 |
| ®Acronal 700 L (Verlaufmittel, 10 %ig in Ethylacetat, Hersteller BASF AG): | 6,9 |
| ®Disperbyk 163 (Dispergieradditiv, Hersteller Fa. BYK-CHemie, Wesel): | 2,7 |
| ®Bentone 34 (Rheologiehilfsmittel, 10 %ig, Hersteller Kronos Titan): | 12,1 |
| Bayertitan R-KB 3 (Titandioxid-Pigment): | 328,0 |
| Microtalc A.T. 1 (Füllstoff, Hersteller Norwegian Talc, Bergen) | 58,0 |
| EWO (Schwerspat, Hersteller Sachtleben, Duisburg): | 420,0 |
| Gemisch aus Solvesso 100 (Alkylbenzolgemisch) und Methoxypropylacetat (3:1): | 42,0 |

Das Gemisch dieser Substanzen wird wie in der allgemeinen Vorschrift beschrieben in einem Dissolver behandelt, Aus dem Wassergehalt wurde ein Molverhältnis von Wasser zu Isocyanatgruppen des Trocknungsmittels wie etwa 1:5 berechnet.

Nach abgeschlossener Trocknung werden die übrigen Bestandteile zugefügt:

| | |
|---|---|
| Lösemittel (wie oben) | 140,7 |
| Zusatzstoff (aus Beispiel 11) | 67,5 |
| Einkomponentenharz (aus Beispiel 10 | 490,3 |

Nach gutem Vermischen erhält man ein fertiges Einkomponentenbindemittel, das in einem Gebinde unter Feuchtigkeitsausschluß gelagert wird,

Auf Stahlplatten aufgespritzt ergibt das Bindemittel sehr hochwertige, glänzende Lackfilme, die nach 2 Tagen bei ca. 25 °C völlig durchgetrocknet und gut lösemittelbeständig sind.

Um festzustellen, ob das Bindemittel ausreichend lagerstabil ist, wird die Viskosität über eine längere Zeit gemessen.

| Lagerung bei Raumtemperatur im geschlossenen Gebinde über | Viskosität |
|---|---|
| 1 Tag<br>7 Tage<br>14 Tage<br>1 Monat<br>3 Monate | 550 mPa.s<br>664 mPa.s<br>703 mPa.s<br>720 mPa.s<br>750 mPa.s |
| anschließend noch 2 Tage bei 60 ° C | 1.000 mPa.s |

Ergebnis:

Das Bindemittel zeigt eine sehr gute Lagerstabilität und kann nach mehrmonatiger Lagerung noch problemlos verarbeitet werden.

Beispiel 13 (Vergleich)

Entsprechend Beispiel 12 wird ein gebrauchsfertiges Beschichtungsmittel hergestellt, wobei jedoch die 205,9 Gew.-Teile des Polyisocyanatgemisches gemäß Beispiel 4 durch 231 Gew.-Teile eines Trocknungsmittels gemäß Stand der Technik

(Tosylisocyanat 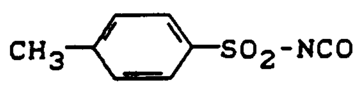 )

ersetzt werden. Das so erhaltene Beschichtungsmittel ergibt zwar sehr gute Lackfilme, weist jedoch nur eine unzureichende Lagerstabilität auf:

| Lagerung bei Raumtemperatur im geschlossenen Gebinde über | Viskosität |
|---|---|
| 1 Tag<br>7 Tage<br>14 Tage<br>1 Monat | 730 mPa.s<br>2.100 mPa.s<br>5.300 mPa.s<br>verpastet |

Der Vergleichsversuch zeigt, daS das Trocknungsmittel gemäß Stand der Technik eine nicht ausreichende Stabilität ergibt. Der Versuch lehrt, daß es ungeeignet ist, Einkomponentenharze zu stabilisieren, die ein verkapptes Amin als Bestandteil enthalten.

Beispiel 14

Dieses Beispiel gibt tabellarisch die Zusammensetzung von 2 Lackbindemitteln an, wobei das erste erfindungsgemäß stabilisiert ist, das zweite mit Tosylisocyanat getrocknet wurde, Das Molverhältnis von Wasser : Isocyanatgruppen des Trocknungsmittels während der Trocknung liegt in beiden Fällen 1:2,2.

| Zusammensetzung: | | |
|---|---|---|
| | Gewichtsteile | |
| | I | II |
| Trocknungsmittel aus Beispiel 8 | 50,1 | - |
| Tosylisocyanat | - | 33,4 |
| Verlaufmittel Acronal 700 L | 3,5 | 3,6 |
| Disperbyk 163 (Dispergieradditiv, Herst. BYK-Wesel) | 1,4 | 1,4 |
| Bentone 34 (Rheologiehilfsmittel) | 6,0 | 6,0 |
| Lösemittel Methoxypropanol/Butylacetat (3:1) | 77,7 | 63 |
| Titandioxid-Pigment R-KB 3 | 164 | 164 |
| Microtalc A.T. 1 (Magnesiumsilicat, Norwegian talc, Bergen) | 29 | 29 |
| EWO (Schwerspat) (Hersteller Sachtleben, Duisburg) | 210 | 210 |
| Einkomponentenharz (aus Beispiel 10) | 470,7 | 510,0 |
| Katalysator Dibutylzinndilaurat | 3,0 | 3,6 |
| Lösemittel Methoxypropanol/Butylacetat (3:1) | 100,0 | 133,7 |
| Feststoffgehalt | ca.70 % | ca.70 % |
| Viskosität (mPa.s) bei ca. 23 °C nach | | |
| 1 Tag | 418 | 613 |
| 7 Tagen | 602 | 1.440 |
| 14 Tagen | 607 | 1.580 |
| 1 Monat | 710 | 1.620 |
| 2 Monaten | 700 | 1.700 |
| 3 Monaten | 715 | 1.810 |

Auch dieser Vergleich zeigt die Vorteile des erfindungsgemäßen Verfahrens.

Beispiel 15

Beispiel 14 wird in mehreren Parallelversuchen wiederholt, wobei die Trocknungsmittel gemäß Beispielen 1, 2, 3, 4, 5, 6, 7 und 9 unter Variation des Molverhältnisses von Wasser:Isocyanatgruppen des Trocknungsmittels von 1:2 bis 1:8 eingesetzt werden.

Bei allen Versuchen zeigt sich, daß bei Raumtemperatur lagerstabile Einkomponenten-Systeme erhalten werden, Die Viskositäten der gebrauchsfertigen Beschichtungsmittel steigt im ungünstigsten Fall nach dreimonatiger Lagerung bei 23 °C um das Doppelte an, Alle Beschichtungsmittel waren nach dreimonatiger Lagerung bei Raumtemperatur noch verarbeitbar.

## Patentansprüche

1. Verwendung von Urethangruppen aufweisenden Isocyanaten oder Isocyanatgemischen mit (cyclo)-aliphatisch gebundenen Isocyanatgruppen, die eine mittlere NCO-Funktionalität von mindestens 0,8 bis unter 2,0 und einen NCO-Gehalt von 5 bis 17 Gew.-% aufweisen, als Trocknungsmittel für feuchte Hilfs- und Zusatzmittel, die bei der Herstellung von feuchtigkeitshärtenden, (cyclo)aliphatisch gebundenen Isocyanatgruppen aufweisende Isocyanat-Prepolymere als Bindemittel enthaltenden Beschichtungsmitteln zur Anwendung gelangen.

2. Verfahren zur Herstellung eines Beschichtungsmittels, welches ein unter dem Einfluß von Feuchtigkeit aushärtendes, aus einem Isocyanat-Prepolymer mit (cyclo)aliphatisch gebundenen Isocyanatgruppen bestehendes Bindemittel, sowie die aus der Lacktechnologie üblichen Hilfs- und Zusatzmittel enthält, dadurch gekennzeichnet, daß man zumindest die nicht völlig trockenen Hilfs- und Zusatzmittel zunächst bei 60 °C bis 120 °C mit einem Urethangruppen aufweisenden Isocyanat oder Isocyanatgemisch mit (cyclo)aliphatisch gebundenen Isocyanatgruppen, einer mittleren NCO-Funktionalität von mindestens 0,8 bis unter 2,0 und einem NCO-Gehalt von 5 bis 17 Gew.-% behandelt und die so behandelten Hilfs- und Zusatzmittel nach Beendigung der spontan ablaufenden Isocyanat/ Wasserreaktion mit dem Bindemittel, sowie gegebenenfalls den restlichen Hilfs- und Zusatzmitteln zum gebrauchsfertigen

Beschichtungsmittel vereinigt.

## Claims

1. The use of urethane isocyanates or isocyanate mixtures containing (cyclo)aliphatically bound isocyanate groups, which have an average NCO functionality of at least 0.8 to below 2.0 and NCO content of 5 to 17% by weight, as drying agents for moisture-containing auxiliaries and additives used in the production of moisture-curing coating compositions containing isocyanate prepolymers bearing (cyclo)aliphatically bound isocyanate groups as binder.

2. A process for the production of a coating composition containing a moisture-curing binder consisting of an isocyanate prepolymer bearing (cyclo)aliphatically bound isocyanate groups and the auxiliaries and additives typically used in paint technology, characterized in that at least the not fully dry auxiliaries and additives are first treated at 60 to 120 °C with a urethane isocyanate or isocyanate mixture bearing (cyclo)aliphatically bound isocyanate groups, which has an (average) NCO functionality of at least 0.8 to below 2.0 and an NCO content of 5 to 17% by weight, and on completion of the spontaneous isocyanate/water reaction the auxiliaries and additives thus treated are combined with the binder and, optionally, with the remaining auxiliaries and additives to form the ready-to-use coating composition.

## Revendications

1. Utilisation d'isocyanates ou de mélanges d'isocyanates présentant des groupes uréthanne contenant des groupes isocyanate liés à des radicaux (cyclo)aliphatiques, qui présentent une fonctionnalité NCO moyenne d'au moins 0,8 à < 2,0 et une teneur NCO de 5 à 17 % en poids, comme agents de dessiccation pour des adjuvants et des additifs humides que l'on utilise comme agents d'enduction contenant des liants lors de la préparation de prépolymères d'isocyanates durcissables à l'humidité, présentant des groupes isocyanate liés à des radicaux (cyclo)aliphatiques.

2. Procédé pour la préparation d'un agent d'enduction qui contient un liant durcissable sous l'influence de l'humidité, constitué par un prépolymère d'isocyanate contenant des groupes isocyanate liés à des radicaux (cyclo)aliphatiques, ainsi que par les adjuvants et les additifs habituels dans la technologie des laques, des vernis et des peintures, caractérisé en ce qu'on traite au moins les adjuvants et les additifs qui ne sont pas complètement séchés, d'abord à une température de 60 °C à 120 °C avec un isocyanate ou un mélange d'isocyanates présentant des groupes uréthanne contenant des groupes isocyanate liés à des radicaux (cyclo)aliphatiques, ayant une fonctionnalité NCO moyenne d'au moins 0,8 à < 2,0 et une teneur NCO de 5 à 17 % en poids, et on réunit les adjuvants et les additifs ainsi traités, au terme de la réaction isocyanate/eau se déroulant spontanément, avec le liant et éventuellement avec les adjuvants et les additifs résiduels pour obtenir un agent d'enduction prêt à l'emploi.